# EUROPEAN PATENT APPLICATION

(11) **EP 2 993 161 A1**
(43) Date of publication of application: **09.03.2016**
(21) Application number: 14791758.7
(22) Date of filing: 25.04.2014
(51) Int. Cl.: C04B 18/14, C04B 18/08, C04B 7/19, C04B 14/10

(54) **PROCESS FOR PRODUCING A FINE CEMENT AGGREGATE FROM RED MUD PRODUCED DURING THE PROCESS OF BAUXITE REFINING (THE BAYER PROCESS)**

(30) Priority: 30.04.2013 BR 102013011886
(71) Applicant: Fundação Educacional de Criciúma, 88806-000 Criciúma SC (BR)
(72) Inventor: NONI JUNIOR, Agenor de, 88809-330 Criciúma - SC (BR); PELISSER, Fernando, 88802-225 Criciúma SC (BR); PETERSON, Michael, 88801-440 Criciúma - SC (BR); MONTEDO, Oscar Rubem Klegues, 88811-020 Criciúma - SC (BR); MINATTO, Flávia Dagostim, 88930-000 Turvo - SC (BR)
(74) Representative: Isern-Jara, Jaime
(86) International application number: PCT/BR2014/000140
(87) International publication number: WO 2014/176656

(57) **Abstract**

**PROCESS FOR PRODUCING A FINE CEMENT AGGREGATE FROM RED MUD PRODUCED DURING THE PROCESS OF BAUXITE REFINING (THE BAYER PROCESS),** presents an invention regarding the production of a fine additive for Portland cement from Red Mud, which is a byproduct of bauxite processing by the Bayer process. In the present invention the material is mixed and then thermally treated so as to develop phases of interest via decompositions and/or crystallizations. The product may contain up to 30% of other byproducts or argillaceous raw materials.

## Description

### Field of invention

The present invention refers to the industrial scale production of a fine aggregate from the byproduct of bauxite processing, "Bayer process," known in this industry as red mud. The process consists basically of submitting red mud, associated or not to other mineral components, to stages of drying, disaggregation, mixing, and subsequent thermal treatment so as to form the phases of interest, to develop service performance, and to diminish leaching of undesirable compounds. The constituent water present in some mineral phases is removed via thermal treatment as well, altering the mineralogical structure and developing pozzolanic characteristics. In present time there is no record of commercial products that have effectively been produced with this byproduct, although there is scientific literature indicating some potential applications. The most significant record is related to the addition of a certain amount of red mud in the production of bricks for building construction. Scientific literature also suggests that some types of red mud from specific regions present, by themselves and with no treatment whatsoever apart from drying, some pozzolanic activity of low intensity. Other authors have performed thermal treatments in different ranges of temperatures than the ones employed in the present process and, in some cases, concluded that they could dose a certain amount of red mud as pozzolan. In practice, these residues are still being deposited in holding ponds. The main limitations of all references found are related to the small amount of red mud that effectively replaces the cementitious fraction and to the performance regarding the mechanical resistance of the test objects. Other studies point to the use of red mud in the composition of clinker, in percentage points smaller than 5%, with compatible results, or in some cases improved, relative to the reference material. In the case of the present invention the developed additive is not a part of the composition of clinker, but it can replace fractions of up to 40% of the Portland cement without its mechanical resistance falling below the thresholds established by technical standards

### State of the art

Replacement or complementary pozzolanic materials to the Portland type cement have become an important part to the new technical and market demands of building construction. Generally they are employed in concretes and mortars to augment durability and mechanical properties of cement based products. Sources for these materials can be naturally occurring, industrial residues, byproducts, and raw materials industrialized for this end. The most common materials in use at the present time are: fly ash, micro-silica, blast furnace slag, rice chaff ash, and metakaolin. The latter is indicated as reference in terms of industrialized pozzolanic materials since it is obtained from the calcination of kaolins of high purity, in temperature intervals between 650 and 800°C. Another example is the fly ash obtained as byproduct of mineral coal combustion in temperatures above 1000°C in power generation plants.

The efficiency of pozzolanic materials, as well as that of Portland cement, is related to the hydration reaction of the final product, the result of which depends on the processing conditions and on the quality of the raw materials employed.

The reactivity level that characterizes the pozzolanic activity of a product can be measured using the Chapelle test, which links the consumption of calcium hydroxide Ca(OH)₂ per gram of reacted pozzolan. The quantity of reacted Ca(OH)₂ can be determined via thermogravimetric differential thermal analysis (DTA-TG). Commercial metakaolin has a pozzolanic activity value between 700 and 1000 mgCa(OH)2/g. This value is higher than what is normally found in pozzolan made from blast furnace slag (427 mgCa(OH)2/g), but compatible with the one obtained from fly ash (875 mgCa(OH)2 g). Products with values below 330 mgCa(OH)2g are considered of low activity and are not considered pozzolanic.

A different standardized test (NBR 5751/92) to measure the level of pozzolanic activity consists in mixing 1 (one) part hydrated lime, 9 (nine) parts normal sand (NBR 7214/82), and the pozzolanic material to be tested. Test objects are made, measuring 50 mm in diameter and 100 mm in height. Curing occurs during 6 days in molds sealed at 55°C. For the material to be approved the test object must present mechanical resistance, in a compression test, higher than 6 MPa, on the seventh day.

A third method, also standardized (NBR 5752/92), employed to determine the level of pozzolanic activity, consists basically of preparing mortar test objects (50 mm in diameter and 100 mm in height) with a proportion of 1:3, cement:normal sand, in which 30% (in volume) of the cement fraction is replaced by the pozzolanic material. After 28 days of curing, sealed, in a kiln at 38°C, mechanical resistance to compression is tested, comparing it to standard test objects (evidence) that do not have pozzolans in their composition. For the material to be considered a quality pozzolan it must have a resistance higher than 70% compared to the reference. In practice this is the most widely used test since it takes into consideration the direct reaction with the Portland cement. On the other hand, it does not directly measure the reaction of the pozzolan with calcium hydroxide.

Thermal treatment (calcination) is the most used process industry wide due to its operational and economic advantages. Regarding the parameters of this process, there are two important variables that must be evaluated: temperature and time of calcination.

Time of calcination, or time of thermal treatment, can vary from seconds (flash calcination) to hours. Flash calcination presents as differential the low tendency of the materials to recrystallize, while higher times of calcination may result in crystallizations that may eventually interfere with pozzolanic activity.

Although kaolin is the most utilized clay material, pozzolanic activity can be developed in other materials, in levels to meet the technical standards, as long as subject to adequate processing. Commercial metakaolins originate from high purity (>90% kaolinite) kaolin extraction. In most cases this level of purity can only be obtained after processing, which raises production cost and environmental impact.

As stated, temperature and time of calcination are important variables. Thus, in selecting raw materials for the production of pozzolan the temperature ranges in which the dehydroxylation/amorphization reactions occur must be carefully evaluated, as well as the temperature in which recrystallization occurs in some compounds.

Portland type cement is still the predominant cementitious material in the world, and its production comes from materials that contain calcium carbonate (CaCO3), silica, alumina, and iron oxide. The raw materials react with one another at high temperature, 1450°C and, upon cooling, clinker is obtained. Despite the excellent technical results and ease of application, the manufacturing of this product demands a large amount of energy and causes the emission of greenhouse gases in a large scale. Up to date data shows that cement production is responsible for 7.5% of the global CO2 emission. Given the above, there is a rising need for new products to replace Portland cement so as to reduce its participation in the composition of concrete, replacing it partially in conventional concrete, or completely in geopolymer cement.

Thus, the present invention provides a process to produce fine additive for cement that can be employed in concrete as well as mortars, made from red mud, a residue of the Bayer processing of bauxite. Bauxite is the main source of alumina, which in turn is the main raw material for the production of metallic aluminum. Brazil occupies a prominent position in the production of alumina. It is estimated that 50% of the mass of all extracted bauxite is Red Mud, whose end is holding ponds, with no use whatsoever, offering permanent risk of contamination to waterbodies in the case of overflow or rupture.

In summary, the Bayer process consists of the digestion of bauxite by lye in a pressure vessel. At this stage of the process most of the alumina contained in bauxite is solubilized, creating a solution. A large amount of impurities are deliberately not solubilized, being separated from the solution by decantation and/or filtration. The clarified solution goes through further stages until alumina is obtained. The cake resulting from the filtration constitutes the Red Mud. The chemical composition of Red Mud varies according to the characteristics of the bauxite deposit, but in general it consists of iron oxide, which represents the largest fraction, silicon oxide, aluminum oxide, sodium oxide, and titanium oxide as its main constituents. The main mineralogical phases present are: hematite, sodalite, gibbsite. There can also be identified: sodium, quartz, rutile, anatase. Another common characteristic of red mud is the presence of free residual lye. It is also common for red mud to solubilize some metals and sulphates above the standards, which then requires that it be deposited in impermeable holding ponds.

Therefore, as a way to provide a commercial application to Red Mud and to contribute to attenuate or solve part of the environmental issues caused by the Bayer process, the present invention provides a process to produce fine additives for cement from the processing of Red Mud.

### Objectives of the invention

The present invention has as objective providing a process to produce fine additive for cement from the Red Mud of the Bayer process by means of thermal treatment at the appropriate temperature.

### Description of the drawings

To provide clarity regarding the present invention it follows a detailed description of it, referencing the attached illustration attached, where:

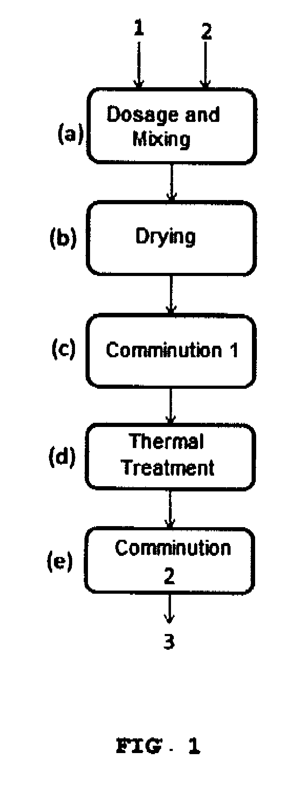

**FIGURE 1** is a schematic flowchart of the pozzolan production process of the present invention.

### Detailed description of the invention

The pozzolan production process from the red mud byproducts of bauxite processing by the Bayer process, in the present invention, has as operation units the following stages:
1 - Dosage and mixing stage - this first stage of the process contemplates the dosage and mixing of eventual raw materials or byproducts that might be incorporated into the red mud, in a fraction of up to 30%, such as: clay minerals and/or fly ash. In this stage the final composition of the pozzolan can be adjusted so as to improve the performance of the final product and to maximize the consumption of byproducts in the same proportion as they are generated. Many displacement and dosage mechanisms can be utilized to perform the mixing of the byproducts, such as power shovels, hoppers, and belt conveyors. On the other hand, the homogenization may also be performed in a horizontal mixer, so as to ensure better control over the stability of the final product. The employment of this stage is facultative, since pure red mud may also be processed.
2 - Drying stage - in this stage the final product's formulation is already determined, and its objective is to prepare the compound for the comminution process, since the operation is more difficult if the materials are humid. The drying process can be performed in rotating dryers, cyclone dryers, moving grate dryers, fixed bed dryers, or fluidized bed dryers. The source of hot air may be discrete or originated from thermal recovery. It might also be coupled directly to stage 4.
3 - Comminution stage 1 - the correctly dosed and homogenized materials go through a stage of comminution to grind and/or disaggregate the coarser grain materials. This comminution may occur via compression, shock, friction, and/or shearing. For this end one may employ jaw crushers, roll crushers, or hammer crushers. The granulometry resulting from the various types of mills may vary from powder that goes through a 0.045 mm mesh to grains that go through 25 mm mesh. This parameter is essential to determine the time of calcination in the following thermal treatment process.

It is worth noting that this comminution stage might be unnecessary depending on the type of technology and equipment to be selected for the dosage and mixing stage.

7 - Thermal treatment stage - this is the principal stage of the entire process, since it determines the quality and pozzolanic characteristics of the final product. The combined compounds in powder form are submitted to thermal treatment in the temperature range of 1100 to 1250°C. The time of calcination at maximum temperature may vary between 5 seconds and 240 minutes.

The composition of the gases in the atmosphere inside the chamber will depend on the type of furnace technology to be chosen for this stage, as well as the type of fuel adopted. Among the furnace options evaluated and possible to be used in this process are: continuous furnace, tray batch furnace, moving grate furnace, wagon furnace, rotating furnace, fixed bed furnace, fluidized bed furnace, or flash type cyclone furnace. Regarding the type of energy matrix one may opt for: electric, natural gas, biomass, gasified biomass, mineral coal, gasified mineral coal, coke, or fuel oil. Given the above, the presence of oxygen in the chamber will vary between 3 and 20% oxygen.

8 - Comminution stage 2 - after thermal treatment the material might be submitted to another process of milling or disaggregation, dry, so that it will meet the necessary granulometry for good technical performance of the commercial product. This is estimated to be approximately > 95% passing through a mesh of approximately < 100 µm.

The stages described above may take on different configurations given the existence or not of dosage, drying, or comminution. Effectively, these definitions are dependent on the type of technology employed in the thermal treatment stage. However, regardless of the choice of thermal treatment type, there is the need for at least one comminution stage, be it before or after thermal treatment. Regarding drying, this stage will always exist given that red mud is necessarily a product of filtration in an aqueous medium. This process may, however, occur in the same furnace where thermal treatment will be conducted.

The final product obtained from the process detailed in the stages mentioned above may also be obtained via a process similar to that employed in the production of cement clinker. In this case the temperatures, both for pre calcination and for the rotating furnace, must be adequately regulated to the values cited above.

Regarding the visual aspect, the raw materials before the process present a reddish hue, tending towards a light shade. After treatment the coloration of the final product retains the reddish hue, but it tends towards a darker shade.

To provide clarity regarding the proposed process, detailed examples follow:

### Example 1

A sample of Red Mud was collected directly from the holding pond of a Brazilian refinery, dried in a kiln at 110°C, ground in an intermittent ball mill for 30 minutes, and sifted in a 0.063 mm mesh. The powder was calcinated at a temperature of 1000°C in an electric kiln and the calcination time at maximum temperature was 60 minutes. The performance of the material produced was measured according to the technical standard NBR 5752/92, which determines the level of pozzolanic activity as described earlier. The mechanical resistance to relative compression result was 81±4%, above the 70% required by technical standard; sum of the oxides of silicon, aluminum and iron was 79.6%, above 70%; loss on ignition 0.0%, less than 10%; mixing water consumption was 110%, less than 115%; specific surface area (B.E.T.) was 16 m2/g. In the test that includes lime, NBR 5751/92, the resistance obtained was 3,1 MPa, less than 6 MPa. This way, the performance of the material produced in association with Portland cement is above necessary for a pozzolan.

### Example 2

The mixture of properly dried and ground powders, prepared according to example 1, was calcinated in an electric furnace at 800°C for a period of 60 minutes. The mechanical resistance to relative compression result was 81+4%, above the 70% required by technical standard; sum of the oxides of silicon, aluminum and iron was 79.6%, above 70%; loss on ignition 0.0%, less than 10%; mixing water consumption was 110%, less than 115%; specific surface area (B.E.T.) was 26 m2/g. In the test that includes lime, NBR 5751/92, the resistance obtained was 3,0 MPa, less than 6 MPa. This way, the performance of the material produced in association with Portland cement is above necessary for a pozzolan.

### Example 3

The mixture of properly dried and ground powders, prepared according to example 1, was calcinated in an electric furnace at 600°C for a period of 60 minutes. The mechanical resistance to relative compression result was 65±4%, below the 70% required by technical standard; sum of the oxides of silicon, aluminum and iron was 78.7%, above 70%; loss on ignition 1.0%, less than 10%; mixing water consumption was 110%, less than 115%; specific surface area was 22 m2/g. In the test that includes lime, NBR 5751/92, the resistance obtained was 2,9 MPa, less than 6 MPa. This way, the performance of the material produced in association with Portland cement is above necessary for a pozzolan.

### Example 4

The mixture of properly dried and ground powders, prepared according to example 1, was calcinated in a rotating furnace at 1200°C for a period of 15 minutes. The mechanical resistance to relative compression result was 80±4%, above the 70% required by technical standard; aluminum and iron 79.6%, above 70%; loss on ignition 0.0%, less than 10%, mixing water consumption was 110%, less than 115%; specific surface area (B.E.T.) was 12 m2/g. In the test that includes lime, NBR 5751/92, the resistance obtained was 3,5 MPa, less than 6 MPa. This way, the performance of the material produced in association with Portland cement is above necessary for a pozzolan.

### Example 5

A mixture containing 80% red mud and 20% typical plastic clay, properly dosed, dried, and ground, prepared according to example 1, was calcinated in an electric rotating furnace at 1200°C for a period of 15 minutes. The mechanical resistance to relative compression result was 90±4%, above the 70% required by technical standard; sum of the oxides of silicon, aluminum and iron was 78%, above 70%; loss on ignition 0.0%, less than 10%; mixing water consumption was 105%, less than 115%. In the test that includes lime, NBR 5751/92, the resistance obtained was 4,0 MPa, less than 6 MPa. This way, the performance of the material produced in association with Portland cement is above necessary for a pozzolan.

### Caption of figures

Figure 1: Qualitative flowchart of the pozzolan production process from red mud.
1- Red mud input;
2 - Input of other materials or the mixture of them (clay materials, kaolins, fly ash from burning mineral coal, 25 or blast furnace slag);
3 - Pozzolan.

## Claims

1. **PROCESS FOR PRODUCING A FINE CEMENT AGGREGATE FROM RED MUD PRODUCED DURING THE PROCESS OF BAUXITE REFINING (THE BAYER PROCESS), is characterized by** obtaining as product a fine additive for cement, with composition and mechanical performance superior to the minimum required pozzolan technical standards when associated with Portland cement.

2. **PROCESS FOR PRODUCING A FINE CEMENT AGGREGATE FROM RED MUD PRODUCED DURING THE PROCESS OF BAUXITE REFINING (THE BAYER PROCESS),** according to claim 1, is **characterized by** the fact that the Product consists of a mixture of red mud in a minimal mass fraction of 70%. The complementary fraction may consist of other materials, such as: clay minerals, kaolins, fly ash from burning mineral coal, or blast furnace slag.

3. **PROCESS FOR PRODUCING A FINE CEMENT AGGREGATE FROM RED MUD PRODUCED DURING THE PROCESS OF BAUXITE REFINING (THE BAYER PROCESS),** according to claim 1, is **characterized by** the fact that the process includes thermal treatment to be performed in the 1100 to 1250°C temperature range.

4. **PROCESS FOR PRODUCING A FINE CEMENT AGGREGATE FROM RED MUD PRODUCED DURING THE PROCESS OF BAUXITE REFINING (THE BAYER PROCESS),** according to claim 3, is **characterized by** the fact that the permanence time in maximum temperature is between 5 seconds and 240 minutes.

5. **PROCESS FOR PRODUCING A FINE CEMENT AGGREGATE FROM RED MUD PRODUCED DURING THE PROCESS OF BAUXITE REFINING (THE BAYER PROCESS),** according to claim 3, is **characterized by** being performed in furnaces, which can be chosen from a group consisting of; continuous furnace, tray batch furnace, moving grate furnace, wagon furnace, rotating furnace, fixed bed furnace, fluidized bed furnace, or flash type cyclone furnace; the oxygen content in the zone of maximum temperature varies between 3 and 20.
